# EUROPEAN PATENT APPLICATION

(11) **EP 4 207 526 A1**
(43) Date of publication of application: **05.07.2023**
(21) Application number: 23150121.4
(22) Date of filing: 03.01.2023
(51) Int. Cl.: H02J 1/08, H02M 1/00, H02M 3/00, H02M 7/04, C25B 1/04, H02J 1/10

(54) **HYDROGEN PRODUCTION POWER SUPPLY SYSTEM**

(30) Priority: 04.01.2022 CN 202210005822
(71) Applicant: Sungrow Hydrogen Sci.&Tech. Co., Ltd., Hefei 230088, Anhui (CN)
(72) Inventor: GU, Yu, Hefei, Anhui (CN)
(74) Representative: Zacco Norway AS

(57) **Abstract**

A hydrogen production power supply system is provided by the present disclosure, wherein two stage conversion modules are arranged between the power supplies, and each output end of the second stage conversion module is connected to a power supply end of each hydrogen production device, respectively, so that independent power supply is provided for each hydrogen production device, which eliminates the loss of gas production caused by the non-uniform load among the hydrogen production devices. In addition, being different from the conventional technology, it is unnecessary for the hydrogen production power supply system to adapt the voltage by using a customized power frequency converter in the present disclosure. Therefore, the path loss issue can be avoided.

## Description

The present disclosure claims the priority to Chinese Patent Application No. 202210005822.3, titled "HYDROGEN PRODUCTION POWER SUPPLY SYSTEM", filed on January 04, 2022.

### FIELD

The present disclosure relates to the technical field of new energy hydrogen production, and in particular, to a hydrogen production power supply system.

### BACKGROUND

As an important secondary energy source and industrial raw material, hydrogen plays an important role in industrial activities. Moreover, the application scenario of hydrogen can be expanded in the field of people's livelihood in the foreseeable future. In conventional technology, hydrogen is mainly produced through high-temperature reforming of fossil fuels, which will generate a large amount of CO₂ and pollutant emissions, and is not conducive to the realization of the national carbon emission target, in which China has announced that it will peak carbon dioxide emissions by 2030 and achieve carbon neutrality by 2060. The use of renewable energy for power generation-hydrogen production by electrolysis of water can achieve zero carbon emissions in the hydrogen production process, which has been vigorously developed domestically and worldwide.

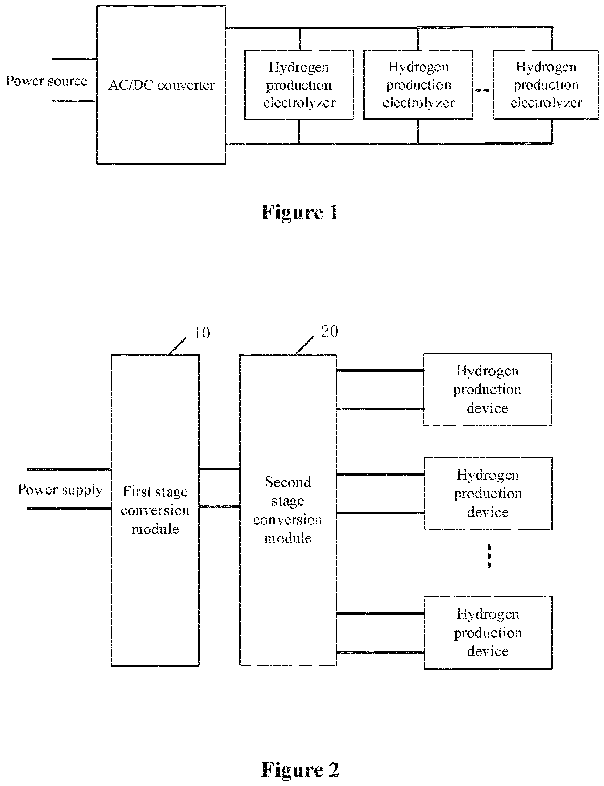

The existing electrolyzed water hydrogen production power supply system, as shown in Figure 1, usually uses an AC/DC converter to supply power to multiple electrolyzers, so that these electrolyzers can implement their own hydrogen production work. However, in practical applications, there may be factors such as differences in factory parameters, inconsistent maintenance cycles, or inconsistencies in parameters between multiple electrolyzers, which results in non-uniform load between electrolyzers and form Buckets effect, causing the loss of gas production.

### SUMMARY

In view of this, the present disclosure provides a hydrogen production power supply system to eliminate the issue of gas production loss.

To this end, the embodiments of the present disclosure provide the following technical solutions.

According to the present disclosure, a hydrogen production power supply system is provided, the system includes: a first stage conversion module and a second stage conversion module, where
an input end of the first stage conversion module is connected to a power supply;
an output end of the first stage conversion module is connected to an input end of the second stage conversion module; and
each output end of the second stage conversion module is connected to a power supply end of each hydrogen production device, respectively.

In an embodiment, the second stage conversion module includes at least two second conversion units, where
an input end of each second conversion unit is connected to each output end of the first stage conversion module, respectively; and
an output end of each second conversion unit is connected to the power supply end of each hydrogen production device, respectively.

In an embodiment, each second conversion unit includes at least one DC/DC converter; and
when the number of the at least one DC/DC converter in the second conversion unit is greater than one, the at least one DC/DC converter is connected to each other in parallel.

In an embodiment, a main circuit topology of the at least one DC/DC converter in each second conversion unit is the same.

In an embodiment, the first stage conversion module includes a first conversion unit, where
an input end of the first conversion unit is connected to the power supply; and
an output end of the first conversion unit is connected to the input end of each second conversion unit, respectively.

In an embodiment, the first stage conversion module includes at least two first conversion units, where
an input end of each first conversion unit is connected to the power supply; and
an output end of each first conversion unit is connected to the input end of each second conversion unit, respectively.

In an embodiment, in a case that the power supply is an alternating current power supply, the first conversion unit includes at least one AC/DC converter, and when the number of the at least one AC/DC converter in the first conversion unit is greater than one, the at least one AC/DC converter is connected to each other in parallel; and
in a case that the power supply is a direct current power supply, the first conversion unit includes at least one DC/DC converter, and when the number of the at least one DC/DC converter in the first conversion unit is greater than one, the at least one DC /DC converter is connected to each other in parallel.

In an embodiment, a main circuit of the at least one AC/DC converter is any one of a diode rectifier circuit, a thyristor rectifier circuit and a fully-controlled device rectifier circuit.

In an embodiment, the system further includes a controller, where the controller is communicatively connected to the first stage conversion module, the second stage conversion module, and each hydrogen production device, and the controller is configured to adjust electrical volumes of the output end of the first stage conversion module based on input end information of the first stage conversion module and output information of the second stage conversion module.

In an embodiment, in a case that the second stage conversion module includes at least two second conversion units, each second conversion unit is communicatively connected to the controller, and each second conversion unit is configured to adjust electrical volumes of the output end of each second conversion unit for a corresponding hydrogen production device, respectively.

A hydrogen production power supply system is provided by the present disclosure, wherein two stage conversion modules are arranged between a power supply, and each output end of the second stage conversion module is connected to a power supply end of each hydrogen production device, respectively, so that independent power supply is provided for each hydrogen production device, which eliminates the loss of gas production caused by the non-uniform load among the hydrogen production devices. In addition, being different from the conventional technology, it is unnecessary for the hydrogen production power supply system to adapt the voltage by using a customized power frequency converter in the present disclosure. Therefore, the path loss issue can be avoided.

### BRIEF DESCRIPTION OF THE DRAWINGS

In order to more clearly illustrate the technical solutions in the embodiments of the present disclosure or the prior art, the accompanying drawings used in the description of the embodiments or the prior art will be briefly introduced here. Obviously, the accompanying drawings in the following description are merely some embodiments of the present disclosure. Those skilled in the art can also obtain other drawings based on these drawings without creative efforts.
Figure 1 is a schematic diagram of a structure of a hydrogen production power supply system according to the prior art.
Figure 2 is a schematic diagram of a structure of a hydrogen production power supply system according to an embodiment of the present disclosure.
Figure 3 is a schematic diagram of a specific structure of the hydrogen production power supply system according to an embodiment of the present disclosure.
Figure 4a and Figure 4b are schematic diagrams of two specific structures of the hydrogen production power supply system according to an embodiment of the present disclosure, respectively.
Figure 5a and Figure 5b are schematic diagrams of two specific structures of the hydrogen production power supply system according to another embodiment of the present disclosure, respectively.
Figure 6 is a schematic diagram of a specific structure of the hydrogen production power supply system according to another embodiment of the present disclosure.

### DETAILED DESCRIPTION OF EMBODIMENTS

The following will clearly and completely describe the technical solutions in the embodiments of the present disclosure with reference to the accompanying drawings in the embodiments of the present disclosure. Obviously, the described embodiments are only some, not all, embodiments of the present disclosure. Based on the embodiments of the present disclosure, all other embodiments obtained by the skilled in the art without making creative efforts belong to the protection scope of the present disclosure.

In this disclosure, the term "comprise", "include" or any other variation thereof is intended to cover a non-exclusive inclusion such that a process, method, product, or device comprising a set of elements includes not only those elements, but also includes other elements that are not explicitly listed, or also includes elements inherent in such a process, method, product, or device. Without further limitations, an element defined by the phrase "comprise(s)/comprising/include(s)/including a/an ..." does not exclude the existence of additional identical elements in the process, method, product or device comprising said element.

The present disclosure provides a hydrogen production power supply system to eliminate the issue of gas production loss.

As shown in Figure 2, the hydrogen production power supply system includes a first stage conversion module 10 and a second stage conversion module 20.

An input end of the first stage conversion module 10 is connected to a power supply to directly receive power from the power supply.

An output end of the first stage conversion module 10 is connected to an input end of the second stage conversion module 20, so that the first stage conversion module 10 initially converts the power supply energy of the power supply, and then inputs the converted power supply energy to the second stage conversion module 20.

The output side of the second stage conversion module 20 is provided with multiple output ends, and each output end is correspondingly connected to the power supply end of each hydrogen production device so that the second stage conversion module 20 can provide each hydrogen production device with independent power supply.

In practical applications, the hydrogen production device may be water electrolysis hydrogen production device or lye hydrogen production device, etc., which is not specifically limited here and depends on the application context.

The hydrogen production power supply system provided in this embodiment is configured with two stage conversion modules between the power supply, that is, by using a two-stage structure, each output end of the second stage conversion module 20 is correspondingly connected to the power supply end of each hydrogen production device to provide independent power supply for each hydrogen production device, which can reduce the Buckets effect caused by inconsistent parameters of electrolysis device, and eliminate the gas production loss caused by non-uniform load among each hydrogen production device.

It should be noted that an additional customized power frequency converter is required on the AC side for voltage matching in order to adapt to the voltage difference between the two ends of the AC/DC converter according to the prior art solution shown in Figure 1, which results in a significant path loss issue.

The hydrogen production power supply system provided in the embodiment can supply power to each hydrogen production device through the above-mentioned two stage conversion modules, which can better adapt the voltage between the power source and the hydrogen production device without customized power frequency converter in the prior art for matching the voltage, thereby eliminating the significant path loss issue.

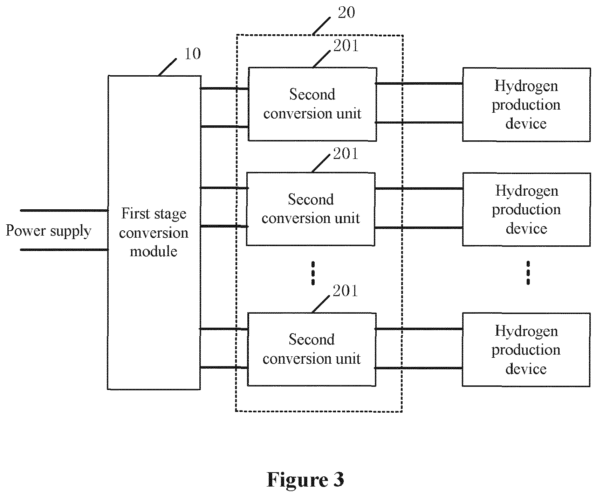

Based on the previous embodiment, in an embodiment, referring to Figure 3, in the hydrogen production power supply system, the second stage conversion module 20 includes at least two second conversion units 201. An input end of each second conversion unit 201 is correspondingly connected to each output end of the first stage conversion module 10 to receive the electrical energy output from the output ends of the first stage conversion module 10. An output end of each second conversion unit 201 is correspondingly connected to the power supply end of each hydrogen production device to provide each hydrogen production device with independent power supply.

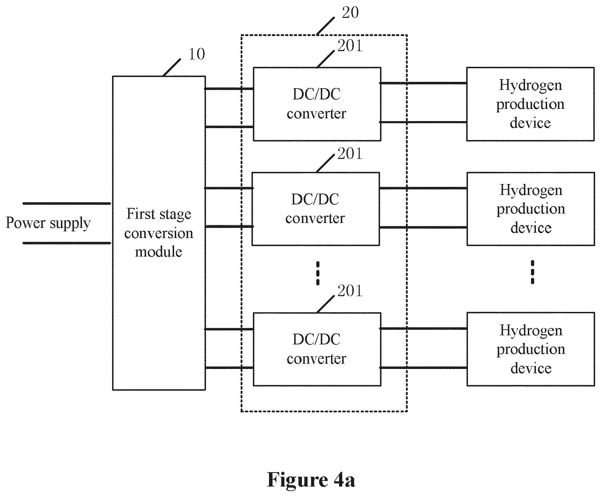

It should be noted that each second conversion unit 201 may be a DC/DC converter, as shown in Figure 4a.

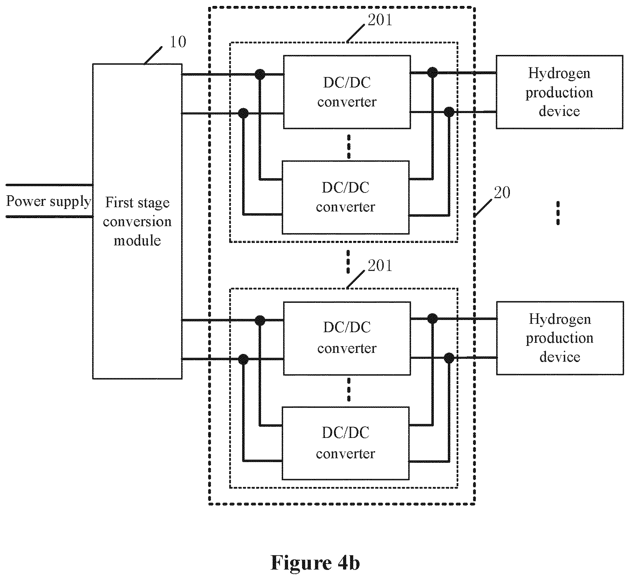

Alternatively, in practical applications, due to the limitation of the capacity of the power semiconductor device inside the DC/DC converter, each second conversion unit 201 may include at least two DC/DC converters, respectively. The DC/DC converters in each second conversion unit 201 are connected to each other in parallel, as shown in Figure 4b. Furthermore, an appropriate number of DC/DC converters can be arranged and connected in parallel to form a corresponding second conversion unit 201 according to the rated power of each hydrogen production device, depending on the specific practical application context.

In practical applications, the topology of the main circuit of the DC/DC converter in each second conversion unit 201 may be the same topology or a different topology, which depends on the specific application contexts. Both configurations are within the protection scope of this disclosure.

In the hydrogen production power supply system provided in this embodiment, the second stage conversion module 20 includes two or more independent conversion units, and each independent conversion unit is connected to a corresponding hydrogen production device, so as to implement independent power supply for a single hydrogen production device.

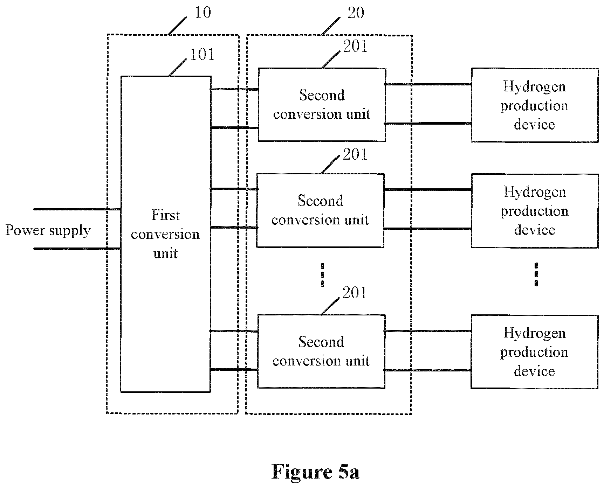

Base on the previous embodiment, in an embodiment, referring to Figure 5a (as an example shown on the basis of Figure 3), in the hydrogen production power supply system, the first stage conversion module 10 includes a first conversion unit 101. An input end of the first conversion unit 101 is connected to a power supply, and an output end of the first conversion unit 101 is connected to the input end of each the second conversion units 201, respectively.

For the structure shown in Figure 5a, the input ends of each second conversion unit 201 are connected in parallel to the output ends of the first conversion unit 101, that is, the input ends of each second conversion unit 201 are equipotential. Thus, each of second conversion unit 201 shares the first stage power electronic topology to save costs.

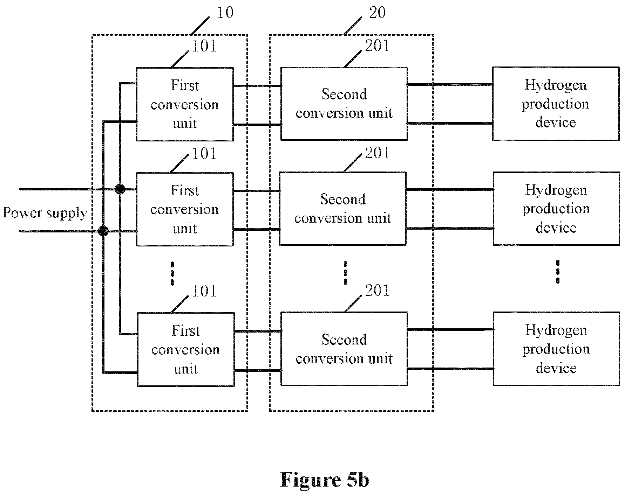

In practical applications, the hydrogen production power supply system may also be shown in Figure 5b, and the first stage conversion module 10 includes at least two first conversion units 101. An input end of each first conversion unit 101 is connected to the power supply, and an output end of each first conversion unit 101 is correspondingly connected to the input end of each second conversion unit 201.

For the structure shown in Figure 5b, each second conversion unit 201 is configured with its own first conversion unit 101. Although its structural cost is higher than the structure shown in Figure 5a, it is still within the protection scope of the present disclosure.

Regardless of the structure shown in Figure 5a or the structure shown in Figure 5b, when the power source is an alternating current power source, such as a power grid, a wind generator and the like, the first conversion unit 101 includes at least one AC/DC converter. When the power source is a direct current power source, such as photovoltaic power generation, etc., the first conversion unit 101 includes at least one DC/DC converter. Also, due to the limitation of the capacity of the power semiconductor device inside the first conversion unit 101, when the number of AC/DC converters in the first conversion unit 101 is greater than one, the AC/DC converters are connected to each other in parallel. When the number of DC/DC converters in the first conversion unit 101 is greater than one, the DC/DC converters are connected to each other in parallel.

In practical applications, the main circuit of the AC/DC converter may be any one of: a rectifier circuit composed by diodes, a rectifier circuit composed by thyristors, or a rectifier circuit composed by full-control devices such as IGBT, which is not limited here. In light of specific application contexts, such configurations can be determined and are within the protection scope of the present disclosure.

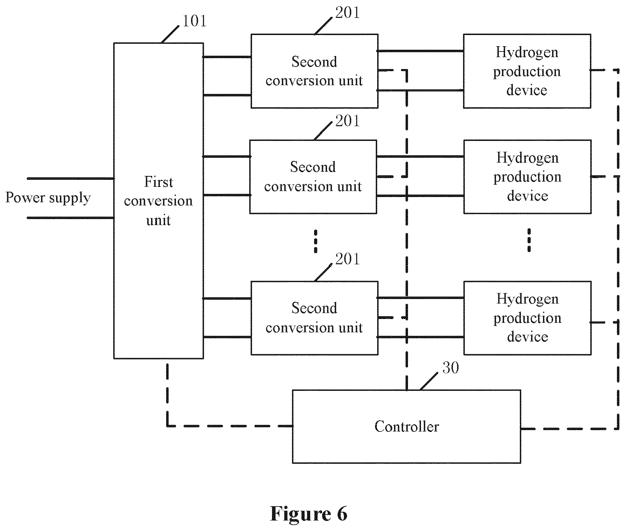

Based on the above embodiments, in an embodiment, referring to Figure 6 (as an example shown on the basis of Figure Sa), the hydrogen production power supply system further includes a controller 30.

The controller 30 is communicatively connected to the first stage conversion module 10, the second stage conversion module 20 and each hydrogen production device, respectively, and the controller 30 is configured to adjust electrical volumes of the output end of the first stage conversion module 10 based on input end information of the first stage conversion module 10 and output information of the second stage conversion module 20.

As shown in Figure 6, the controller 30 respectively communicates with the first stage conversion module 10, each independent second conversion unit 201 in the second stage conversion module 20 and each hydrogen production device in a bidirectional communication manner. The first stage conversion module 10, each independent second conversion unit 201 in the second stage conversion module 20, and each hydrogen production device send status information to the controller 30. The controller 30 sends control commands to the first stage conversion module 10, each independent second conversion unit 201 in the second stage conversion module 20, and each hydrogen production device. The first stage conversion module 10 may collect information such as voltage, current, and power on the power supply side, and the second stage conversion module 20 can collect information such as voltage, current, and power on the hydrogen production device side.

The controller can automatically adjust the output voltage, current or power of the first stage conversion module 10 based on the status of the power supply side and the voltage difference of the hydrogen production device side and other conditions.

When the second stage conversion module 20 includes at least two second conversion units 201, each second conversion unit 201 is communicatively connected to the controller 30, and adjusts the electrical volumes of its own output end for the corresponding hydrogen production device..

More specifically, each independent second conversion unit 201 inside the second stage conversion module 20 can independently adjust its own output voltage, output current output power, and other parameters, based on the characteristics and operation conditions of the corresponding hydrogen production device and the power conditions on the power supply side.

In practical applications, each independent second conversion unit 201 inside the second stage conversion module 20 can also independently shut down a certain hydrogen production device based on the condition of detection instruments.

It should be noted that the controller 30 may be configured independently or integrated with other controllers. In light of specific application contexts, such configurations can be determined, and all of which are within the protection scope of the present disclosure.

The hydrogen production power supply system provided in this embodiment employs a two-stage power electronic topology structure. The first stage conversion module 10 performs preliminary conversion of electrical energy, and the second stage conversion module 20 performs accurate adjustment of voltage and current, which is applicable for specific needs of hydrogen production devices. In practical applications, the first stage conversion module 10 may specifically be a step-down conversion, and the second stage conversion module 20 may specifically be a step-up conversion, which is not limited here as long as it can adapt the voltage between the power source and the hydrogen production device.

Each embodiment in this specification is described in a progressive manner, the same and similar parts of each embodiment can be referred to each other, and each embodiment focuses on the differences from other embodiments. In particular, for the system or the system embodiments, since it is basically similar to the method embodiments, the description is relatively simple and the related parts can refer to the part of the description of the method embodiment. The systems and system embodiments described above are merely illustrative, wherein the units described as separate components may or may not be physically separated, and the components shown as units may or may not be physical units, that is, they can be located in one place, or they can be distributed to multiple network elements. Part or all of the modules can be selected according to practical needs to achieve the purpose of the solution of embodiments. It can be understood and implemented by those skilled in the art without creative efforts.

Professionals can further realize that the exemplary units and algorithm steps described in conjunction with the embodiments disclosed herein can be implemented by electronic hardware, computer software or a combination of the two. In order to clearly illustrate the interchangeability of the hardware and software, the compositions and steps of each example have been generally described according to their functions in the above description. Whether these functions are implemented by hardware or software depending on the specific application and design constraints of the technical solution. Those skilled in the art may use different methods to implement the described functions for each specific application, but such implementations should not be regarded as beyond the scope of the present disclosure.

For the above description of the disclosed embodiments, the features recorded in each embodiment in this specification can be replaced or combined with each other, so that those skilled in the art can implement or utilize the present disclosure. Various modifications to these embodiments will be obvious to those skilled in the art, and the general principles defined herein may be implemented in other embodiments without departing from the scope of the disclosure. Therefore, the present disclosure will not be limited to the embodiments shown herein, but protect the widest scope that is consistent with the principles and novel features disclosed herein.

## Claims

1. A hydrogen production power supply system, comprising: a first stage conversion module and a second stage conversion module, wherein
an input end of the first stage conversion module is connected to a power supply;
an output end of the first stage conversion module is connected to an input end of the second stage conversion module; and
each output end of the second stage conversion module is connected to a power supply end of each hydrogen production device, respectively.

2. The hydrogen production power supply system according to claim 1, wherein the second stage conversion module comprises at least two second conversion units;
wherein an input end of each second conversion unit is connected to each output end of the first stage conversion module, respectively; and
wherein an output end of each second conversion unit is connected to the power supply end of each hydrogen production device, respectively.

3. The hydrogen production power supply system according to claim 2, wherein each second conversion unit comprises at least one DC/DC converter; and
when the number of the at least one DC/DC converter in the second conversion unit is greater than one, the at least one DC/DC converter is connected to each other in parallel.

4. The hydrogen production power supply system according to claim 3, wherein a main circuit topology of the at least one DC/DC converter in each second conversion unit is the same.

5. The hydrogen production power supply system according to claim 2, wherein the first stage conversion module comprises a first conversion unit;
wherein an input end of the first conversion unit is connected to the power supply; and
wherein an output end of the first conversion unit is connected to the input end of each second conversion unit, respectively.

6. The hydrogen production power supply system according to claim 2, wherein the first stage conversion module comprises at least two first conversion units;
wherein an input end of each first conversion unit is connected to the power supply; and
wherein an output end of each first conversion unit is connected to the input end of each second conversion unit, respectively.

7. The hydrogen production power supply system according to claim 5 or 6, wherein
in a case that the power supply is an alternating current power supply, the first conversion unit comprises at least one AC/DC converter, and when the number of the at least one AC/DC converter in the first conversion unit is greater than one, the at least one AC/DC converter is connected to each other in parallel; and
in a case that the power supply is a direct current power supply, the first conversion unit comprises at least one DC/DC converter, and when the number of the at least one DC/DC converter in the first conversion unit is greater than one, the at least one DC/DC converter is connected to each other in parallel.

8. The hydrogen production power supply system according to claim 7, wherein a main circuit of the at least one AC/DC converter is any one of a diode rectifier circuit, a thyristor rectifier circuit and a fully-controlled device rectifier circuit.

9. The hydrogen production power supply system according to any one of claims 1 to 6, further comprising a controller;
wherein the controller is communicatively connected to the first stage conversion module, the second stage conversion module, and each hydrogen production device, and the controller is configured to adjust electrical volumes of the output end of the first stage conversion module based on input end information of the first stage conversion module and output information of the second stage conversion module.

10. The hydrogen production power supply system according to claim 9, wherein in a case that the second stage conversion module comprises at least two second conversion units, each second conversion unit is communicatively connected to the controller, and each second conversion unit is configured to adjust electrical volumes of the output end of each second conversion unit for a corresponding hydrogen production device, respectively.
